(19) **Europäisches Patentamt / European Patent Office / Office européen des brevets**

(11) **EP 4 261 668 A1**

(12) **EUROPEAN PATENT APPLICATION**
published in accordance with Art. 153(4) EPC

(43) Date of publication:
**18.10.2023 Bulletin 2023/42**

(21) Application number: **21905778.3**

(22) Date of filing: **16.12.2021**

(51) International Patent Classification (IPC):
*G06F 3/0488* (2022.01)

(52) Cooperative Patent Classification (CPC):
**G06F 3/041; G06F 3/04812; G06F 3/0488;
G06F 3/04883**

(86) International application number:
**PCT/CN2021/138732**

(87) International publication number:
**WO 2022/127852 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020 CN 202011511097**

(71) Applicant: **Huawei Technologies Co., Ltd.
Shenzhen, Guangdong 518129 (CN)**

(72) Inventors:
• **LIN, Che**
  **Shenzhen, Guangdong 518129 (CN)**
• **ZHANG, Bo**
  **Shenzhen, Guangdong 518129 (CN)**
• **ZHOU, Yiyang**
  **Shenzhen, Guangdong 518129 (CN)**
• **HUANG, Bo**
  **Shenzhen, Guangdong 518129 (CN)**

(74) Representative: **Gill Jennings & Every LLP
The Broadgate Tower
20 Primrose Street
London EC2A 2ES (GB)**

(54) **FINGER TOUCH OPERATION DISPLAY METHOD AND APPARATUS**

(57)    This application discloses a finger touch operation display method and apparatus. In response to a touch operation performed by a physical finger on a first screen of a control terminal, the control terminal obtains touch information of the touch operation, and then the control terminal reproduces a finger form of the touch operation based on the touch information, to display the touch operation on a second screen in a form of a virtual finger. According to a solution of this application, a three-dimensional virtual finger can be reproduced based on two-dimensional touch information, so that visual feedback of a touch operation is implemented at low costs and realistically.

FIG. 4

## Description

This application claims priority to Chinese Patent Application No. 202011511097.4, filed with the China National Intellectual Property Administration on December 18, 2020 and entitled "FINGER TOUCH OPERATION DISPLAY METHOD AND APPARATUS", which is incorporated herein by reference in its entirety.

## TECHNICAL FIELD

This application relates to the field of computer technologies, and in particular, to a finger touch operation display method and apparatus.

## BACKGROUND

When a user performs a touch operation on a control terminal, if visual feedback can be performed on the touch operation, user experience can be improved.
At present, there are the following two real-time interactive display feedback solutions between the user and the control terminal.

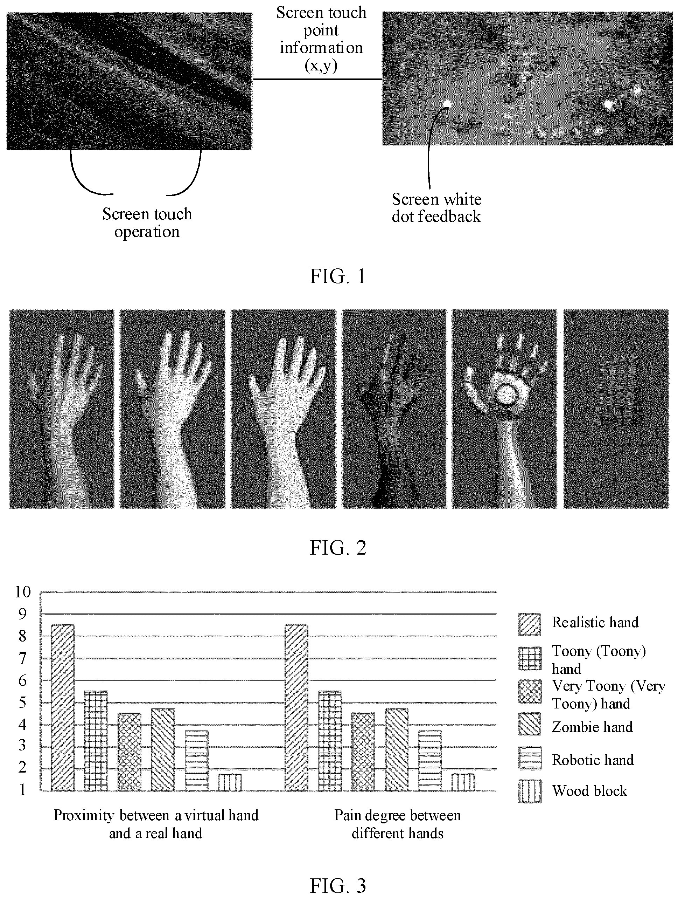

(1) FIG. 1 is a schematic diagram of a white dot feedback effect of a screen touch operation. For example, in a large-screen game scenario, a line of sight of the user stays on a large screen, and a touch point position of the user on a hand-held device or a floating point position above a floating device is used to feed back in a form of a small white dot on the screen. At present, most smartphones and floating devices use this feedback manner. A principle is simple. Corresponding white dot information is drawn through two-dimensional (2-dimensional, 2d) position input of the screen. A disadvantage is that an operation of the user cannot be realistically reproduced, and there is a large difference between the visual feedback on the screen and the user's staring at the device to operate.
(2) Real-time interactive display feedback is implemented through a development suite of leap motion, and virtual hand drawing applications (applications, apps) is developed based on Unity or Unreal Engine. Most of the existing researches on virtual hand illusion (virtual hand illusion, VHI) use this manner. An advantage is strong sense of reality. A very realistic hand can be rendered, and even 1 to 1 modeling of the user's hand can be supported, to reflect more realistic visual feedback. A disadvantage is excessive reliance on three-dimensional (3-dimensional, 3d) joints extraction information of devices such as the leap motion, costs are high, and it is difficult to implement when the user only holds a device that provides 2d position input of a screen, such as a mobile phone.

In general, neither of the foregoing solutions can implement visual feedback of a touch operation at low costs and realistically.

## SUMMARY

This application provides a finger touch operation display method and apparatus, to implement visual feedback of a touch operation at low costs and realistically.
According to a first aspect, a finger touch operation display method is provided. The method includes: A control terminal obtains touch information of a touch operation in response to the touch operation performed by a physical finger on a first screen of the control terminal, where the touch information includes at least one piece of the following information: touch point coordinates of the physical finger on the first screen, information about a touch region centered around the touch point coordinates, a yaw of the physical finger relative to an orientation of the first screen, and a pitch between the physical finger and the first screen. The touch operation is displayed, based on the touch information, in a form of a virtual finger on a second screen controlled by the control terminal.
In this aspect, the touch information of the touch operation performed by the physical finger on the first screen of the control terminal is obtained. The touch operation is displayed, based on the touch information, in the form of the virtual finger on the second screen controlled by the control terminal, so that visual feedback of a touch operation can be implemented at low costs and realistically.
In a possible implementation, that the touch operation is displayed, based on the touch information, in a form of a virtual finger on a second screen controlled by the control terminal includes: Joint point information of the physical finger is obtained based on the touch information. Rendering is performed based on the joint point information of the physical finger and a preset virtual finger model to obtain a form of the virtual finger corresponding to the touch operation. The form of the virtual finger is displayed on the second screen.
In this implementation, rendering is performed on the preset virtual finger model based on the joint point information of the physical finger to obtain the form of the virtual finger corresponding to the touch operation, and the form of the virtual finger is displayed on the second screen, so that visual feedback of a touch operation can be realistically implemented. Compared with white dot feedback, user experience is improved.

In another possible implementation, that joint point information of the physical finger is obtained based on the touch information includes: An identifier of the physical finger is obtained based on the touch information, where the identifier indicates which finger the physical finger is. The joint point information of the physical finger is determined based on the identifier of the physical finger, the touch information of the physical finger on the first screen, and motion sensing information of the operating terminal.

In this implementation, a physical finger that performs a touch operation on the first screen is distinguished based on the touch information, so that the joint point information of the physical finger can further be accurately determined. The joint point information of the physical finger can accurately reflect the form of the physical finger.

In still another possible implementation, that an identifier of the physical finger is obtained based on the touch information includes: The identifier of the physical finger is determined based on the touch information through a classification model.

In this implementation, the touch information of the touch operation of the physical finger on the first screen may be inputted into a trained classification model. The classification model can output a probability of a specific finger to which the physical finger belongs, and the specific finger to which the physical finger belongs can be accurately determined based on a maximum probability, that is, the identifier of the physical finger is obtained.

In still another possible implementation, that rendering is performed based on the joint point information of the physical finger and a preset virtual finger model to obtain a form of the virtual finger corresponding to the touch operation includes: The virtual finger model is obtained corresponding to the physical finger. The virtual finger is obtained based on the joint point information of the physical finger and joint point data of the virtual finger model. The virtual finger is rotated and/or translated based on the touch information to obtain the form of the virtual finger corresponding to the touch operation.

In this implementation, the virtual finger is obtained based on the joint point information of the physical finger and the joint point data of the virtual finger model; and the virtual finger is rotated and/or translated based on the touch information to obtain the form of the virtual finger corresponding to the touch operation, to realistically obtain the form of the virtual finger.

In still another possible implementation, the touch region is in a near elliptical shape, and the information about the touch region includes a touch area, a major axis, and a minor axis of the near elliptical shape.

In still another possible implementation, the joint point information of the physical finger is a joint bending angle of the physical finger.

According to a second aspect, a finger touch operation display apparatus is provided. The apparatus includes: a first obtaining unit, configured to obtain touch information of a touch operation in response to the touch operation performed by a physical finger on a first screen of a control terminal, where the touch information includes at least one piece of the following information: touch point coordinates of the physical finger on the first screen, information about a touch region centered around the touch point coordinates, a yaw of the physical finger relative to an orientation of the first screen, and a pitch between the physical finger and the first screen; and a first display unit, configured to display, based on the touch information, the touch operation in a form of a virtual finger on a second screen controlled by the control terminal.

In a possible implementation, the first display unit includes: a second obtaining unit, configured to obtain joint point information of the physical finger based on the touch information; a rendering unit, configured to perform rendering based on the joint point information of the physical finger and a preset virtual finger model to obtain a form of the virtual finger corresponding to the touch operation; and a second display unit, configured to display the form of the virtual finger on the second screen.

In still another possible implementation, the second obtaining unit includes: a third obtaining unit, configured to obtain an identifier of the physical finger based on the touch information, where the identifier indicates which finger the physical finger is; and a determining unit, configured to determine the joint point information of the physical finger based on the identifier of the physical finger, the touch information of the physical finger on the first screen, and motion sensing information of the operating terminal.

In still another possible implementation, the third obtaining unit is configured to determine the identifier of the physical finger based on the touch information through a classification model.

In still another possible implementation, the rendering unit includes: a fourth obtaining unit, configured to obtain the virtual finger model corresponding to the physical finger; a fifth obtaining unit, configured to obtain the virtual finger based on the joint point information of the physical finger and joint point data of the virtual finger model; and a rotation and translation unit, configured to rotate and/or translate the virtual finger based on the touch information to obtain the form of the virtual finger corresponding to the touch operation.

In still another possible implementation, the touch region is in a near elliptical shape, and the information about the touch region includes a touch area, a major axis, and a minor axis of the near elliptical shape.

In still another possible implementation, the joint point information of the physical finger is a joint bending angle of the physical finger.

According to a third aspect, a finger touch operation display apparatus is provided. The apparatus includes: a processor, a memory, an input apparatus, and an output apparatus. The memory stores instructions, and when the instructions are executed by the processor, the apparatus is enabled to perform the following operations:
Touch information of a touch operation is obtained in response to the touch operation performed by a physical finger on a first screen of the control terminal, where the touch information includes at least one piece of the following information: touch point coordinates of the physical finger on the first screen, information about a touch region centered around the touch point coordinates, a yaw of the physical finger relative to an orientation of the first screen, and a pitch between the physical finger and the first screen. The touch operation is displayed, based on the touch information, in a form of a virtual finger on a second screen controlled by the control terminal.

In a possible implementation, that the processor performs the operation in which the touch operation is displayed, based on the touch information, in a form of a virtual finger on a second screen controlled by the control terminal includes: Joint point information of the physical finger is obtained based on the touch information. Rendering is performed based on the joint point information of the physical finger and a preset virtual finger model to obtain a form of the virtual finger corresponding to the touch operation. The form of the virtual finger is displayed on the second screen.

In still another possible implementation, that the processor performs the operation in which joint point information of the physical finger is obtained based on the touch information includes: An identifier of the physical finger is obtained based on the touch information, where the identifier indicates which finger the physical finger is. The joint point information of the physical finger is determined based on the identifier of the physical finger, the touch information of the physical finger on the first screen, and motion sensing information of the operating terminal.

In still another possible implementation, that the processor performs the operation in which an identifier of the physical finger is obtained based on the touch information includes: The identifier of the physical finger is determined based on the touch information through a classification model.

In still another possible implementation, that the processor performs the operation in which rendering is performed based on the joint point information of the physical finger and a preset virtual finger model to obtain a form of the virtual finger corresponding to the touch operation includes: The virtual finger model is obtained corresponding to the physical finger. The virtual finger is obtained based on the joint point information of the physical finger and joint point data of the virtual finger model. The virtual finger is rotated and/or translated based on the touch information to obtain the form of the virtual finger corresponding to the touch operation.

In still another possible implementation, the touch region is in a near elliptical shape, and the information about the touch region includes a touch area, a major axis, and a minor axis of the near elliptical shape.

In still another possible implementation, the joint point information of the physical finger is a joint bending angle of the physical finger.

According to a fourth aspect, a computer-readable storage medium is provided, including computer instructions. When the computer instructions are run on a computer, the method according to the first aspect or any possible implementation of the first aspect is performed.

According to a fifth aspect, a computer program product including instructions is provided, including computer instructions. When the computer instructions are executed on a computer, the computer is enabled to perform the method according to the first aspect or any possible implementation of the first aspect.

**BRIEF DESCRIPTION OF DRAWINGS**

FIG. 1 is a schematic diagram of a white dot feedback effect of a screen touch operation;
FIG. 2 is a schematic diagram of six hand models with different appearances;
FIG. 3 shows experimental results of six hands with different appearances;
FIG. 4 is a schematic flowchart of a finger touch operation display method according to an embodiment of this application;
FIG. 5 is a schematic diagram of a touch region of a physical finger on a first screen;
FIG. 6 is a schematic diagram of a pitch (pitch) between a physical finger and a first screen;
FIG. 7 is a schematic diagram of an example of a pitch (pitch) between a physical finger and a first screen;
FIG. 8 is a schematic diagram of an effect of displaying a touch operation in a form of a virtual finger according to a solution of an embodiment of this application;
FIG. 9 is a schematic flowchart of another finger touch operation display method according to an embodiment of this application;
FIG. 10 is a schematic diagram of an example of joint point information of a left index finger and a left thumb;

FIG. 11 is a schematic diagram of a virtual finger model;

FIG. 12 is a schematic diagram of a structure of a finger touch operation display apparatus according to an embodiment of this application; and

FIG. 13 is a schematic diagram of a structure of another finger touch operation display apparatus according to an embodiment of this application.

## DESCRIPTION OF EMBODIMENTS

The following describes embodiments of this application with reference to the accompanying drawings in embodiments of this application.

The following briefly describes several concepts that may be involved in this application.

Rubber hand illusion (rubber hand illusion, RHI) refers to use of rubber hands to study a sense of belonging of a human body.

VHI refers to that, with the evolution, maturity, and popularization of technologies such as virtual reality (virtual reality, VR), RHI evolves into performing experiments using virtual hands, and study how processing of virtual hands affects psychological perception of people.

At present, there are many research results on RHI and VHI. The main purpose of the research is to study perception of a prosthetic hand, to obtain some laws in cognitive neuroscience, and to guide what should be paid attention to in VR application design. A relationship between an appearance of a virtual hand and human perception is studied in a plurality of researches. For example, as shown in FIG. 2, experiments are performed through six hand models with different appearances to obtain experimental results of six hands with different appearances shown in FIG. 3, and a conclusion is finally drawn.

(1) Any model can arouse participants' perceptions, but effects are different.

(2) The model with the strongest perceptual effect is the one closest to a human hand. That is, using the most realistic hand appearance can cause a user a stronger sense of real ownership.

Therefore, when the user performs a touch operation on a control terminal, if an operation of the user on the control terminal can be truly reproduced, perception experience of the user is stronger than that of simple visual feedback. For example, in a large-screen game scenario, a user's line of sight stays on a large screen. If a finger operation of the user on the screen can be virtually drawn on the large screen to achieve a relatively realistic effect, compared with common white dot feedback, user experience will be greatly improved.

This application provides a finger touch operation display solution. Touch information of a touch operation performed by a physical finger on a first screen of a control terminal is obtained. The touch operation is displayed, based on the touch information, in a form of a virtual finger on a second screen controlled by the control terminal, so that visual feedback of a touch operation can be implemented at low costs and realistically.

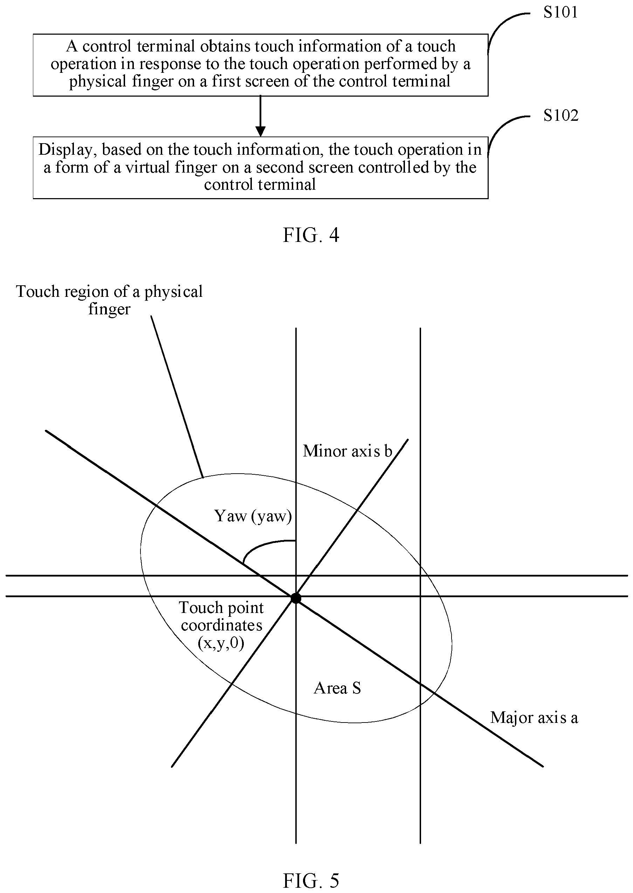

FIG. 4 is a schematic flowchart of a finger touch operation display method according to an embodiment of this application. For example, the method may include the following steps.

S101: A control terminal obtains touch information of a touch operation in response to the touch operation performed by a physical finger on a first screen of the control terminal, where the touch information includes at least one piece of the following information: touch point coordinates of the physical finger on the first screen, information about a touch region centered around the touch point coordinates, a yaw of the physical finger relative to an orientation of the first screen, and a pitch between the physical finger and the first screen.

In this embodiment, the control terminal has the first screen, and the control terminal may display, on another screen (a second screen) connected to the control terminal, an image displayed on the first screen. The connection may be a wired or wireless connection. In a possible implementation, an area of the second screen may be greater than that of the first screen, so as to facilitate viewing by a user. Certainly, this is not limited in this application. For example, the method may be applied to an interaction scenario between a mobile phone and a large screen in which the user plays a mobile phone game staring at the large screen, or a game is displayed on the large screen and the mobile phone is used as a game touchpad for playing the game.

The user uses real fingers (referred to as the "physical finger" in this embodiment, which is relative to a virtually drawn finger (referred to as a "virtual finger")) to perform the touch operation on the first screen of the control terminal. The first screen is generally a touchscreen. The touch operation may be, for example, tap, scrolling, or the like.

In some other implementations, the touch operation may be performed by an object such as a prosthetic hand or a touch pen instead of a finger of a real person. Alternatively, a corresponding virtual object may be reproduced through a method implemented in this application. In this case, a model of the object may be stored in an operating terminal.

FIG. 5 is a schematic diagram of a touch region of a physical finger on a first screen. The touch region is in a near elliptical shape. Certainly, the touch region may alternatively be in another shape, for example, a circle, a square, or another irregular shape. This is not limited in this application. For example, a left index finger is the physical finger, and the physical finger may alternatively be any other finger. This is not limited in this application. The touch information includes at least one piece of the following information: touch point coordinates (x, y, 0) of the physical finger on the first screen, information about a touch region centered around the touch point coordinates, a yaw (yaw) θ of the physical finger relative to an orientation of the first screen, and a pitch (pitch) between the physical finger and the first screen. For example, the touch region is in a near elliptical shape, and the information about the touch region includes a touch area S, a major axis a, and a minor axis b of the near elliptical shape.

When the user controls the second screen on a hand-held operating terminal, the user may rotate and translate the operating terminal, and the like. Therefore, the operating terminal is in a moving state. Therefore, further, motion sensing information of the operating terminal may be obtained. The motion sensing information may include an acceleration at of the operating terminal, a gravitational acceleration gy of the operating terminal, and the like. An acceleration sensor, a gravity sensor (for example, a gyroscope), and the like are disposed on the operating terminal. The acceleration at of the operating terminal can be obtained through the acceleration sensor, and the gravitational acceleration gy of the operating terminal can be obtained through the gravity sensor.

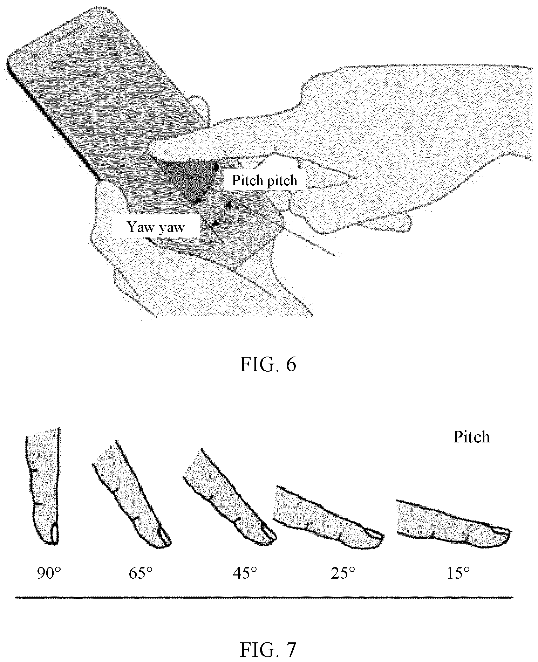

FIG. 6 is a schematic diagram of a pitch (pitch) between a physical finger and a first screen. The pitch may be any value from 0° to 90°. As shown in FIG. 7, five pitches of 90°, 65°, 45°, 25°, and 15° are exemplified. The pitch is related to the touch information. In addition, if the operating terminal is in a moving state, the pitch may change. Therefore, the pitch may also be related to the motion sensing information of the operating terminal. During specific implementation, the touch information and the motion sensing information of the operating terminal may be inputted into a regression model, and the regression model may use linear regression (linear regression), polynomial regression (polynomial regression), ridge regression (ridge regression), lasso regression (lasso regression), or the like. The regression model outputs the pitch between the physical finger and the first screen.

For example, the regression model may be formally described as the following formula 1.

$$ y_m = x_m\beta + \varepsilon \ldots\ldots \text{Formula 1} $$

$x_m$ is the touch information, and may further include the motion sensing information of the operating terminal. *m* is an amount of the touch information.

$y_m$ is the pitch between the physical finger and the first screen, and a value range of $y_m$ is (0° to 90°).

β is a regression parameter.

ε is an error value.

Therefore, the pitch between the physical finger and the first screen may be obtained based on the touch information and the motion sensing information of the operating terminal.

In addition, the regression model may alternatively be trained. Specifically, for example, a screen is divided into uniform grids of 18 * 36, and a specific number of participating users press on the screen with a left and right index finger and a left and right thumb respectively when the screen is in landscape or portrait mode, and record a pressing angle, as shown in FIG. 7. Then, the touch information of the participants and the motion sensing information of the operating terminal are inputted into a to-be-trained regression model, to obtain an output result of the regression model, that is, the pitch between the physical finger and the first screen. Then, the output result is corrected by comparing the output result with the recorded pressing angle before training.

It may be understood that the touch information is 2D information inputted by the user on the control terminal.

S102: Display, based on the touch information, the touch operation in a form of a virtual finger on a second screen controlled by the control terminal.

In this embodiment, the touch operation performed by the physical finger of the user on the first screen of the operating terminal is displayed on the second screen controlled by the control terminal in the form of the virtual finger, to realistically reproduce the touch operation performed by the physical finger on the first screen. Specifically, the touch operation is displayed in the form of the virtual finger on the second screen based on the touch information on the first screen, so that the touch operation of the virtual finger on the second screen is consistent with the touch operation performed by the physical finger on the first screen.

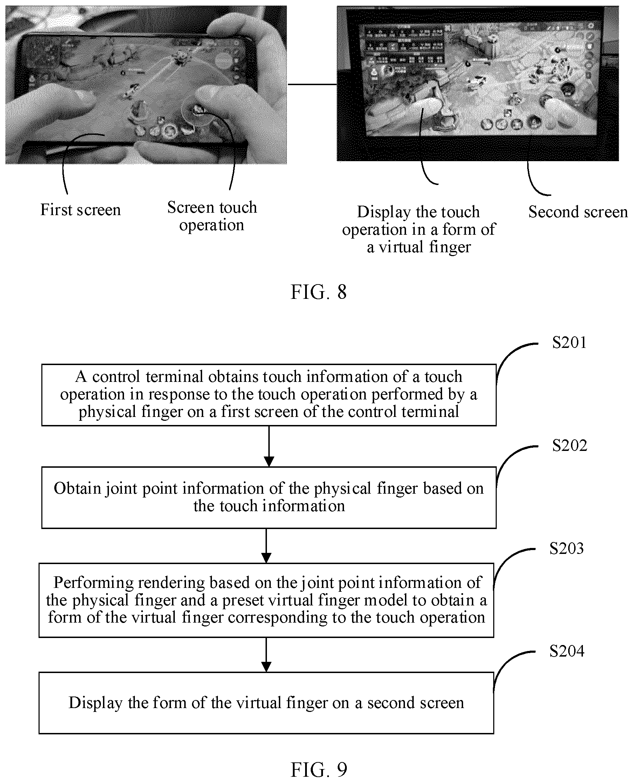

It may be understood that, that the touch operation is displayed in a form of the virtual finger on the second screen refers to that the touch operation of the virtual finger is displayed in a 3D form. In this way, the touch operation is inputted in 2D on the first screen (as shown in the left figure in FIG. 8), and the touch operation of the virtual finger is displayed in 3D on the second screen (as shown in the right figure in FIG. 8). A form of the virtual finger is combined with an image on the second screen, and the touch operation performed by the physical finger of the user on the first screen is realistically reproduced.

For example, the method may be applied to an interaction scenario between a mobile phone and a large screen in which the user plays a mobile phone game staring at the large screen, or a game is displayed on the large screen and the mobile phone is used as a game touchpad for playing the game. According to the solution in this application, a sense of immersion of the user when playing a game can be enhanced, attention of the user can be improved, and operation accuracy of the user can further be improved.

According to a finger touch operation display method provided in this embodiment of this application, the touch information of the touch operation performed by the physical finger on the first screen of the control terminal is obtained, and the touch operation is displayed, based on the touch information, in the form of the virtual finger on the second screen controlled by the control terminal, so that visual feedback of a touch operation can be implemented at low costs and realistically.

FIG. 9 is a schematic flowchart of another finger touch operation display method according to an embodiment of this application. For example, the method includes the following steps.

S201: A control terminal obtains touch information of a touch operation in response to the touch operation performed by a physical finger on a first screen of the control terminal.

For specific implementation of this step, refer to step S101 in the embodiment shown in FIG. 4.

In addition, the touch information may further include an identifier of the physical finger. The identifier of the physical finger may be obtained based on the touch information.

During specific implementation, each finger of the two hands of a person has an identifier (finger_id). First, a physical finger that performs the touch operation on the first screen needs to be identified. Therefore, the identifier of the physical finger is obtained based on the obtained touch information, where the identifier indicates which finger the physical finger is. Specifically, the obtained touch information may be inputted to a trained classification model, and the identifier of the physical finger is determined through the classification model. The classification model may use a classification algorithm such as a support vector machine (support vector machine, SVM), a random forest (random forest), and an XGBoost. In addition, before the touch information is inputted to the classification model, the touch information may further be preprocessed, to improve normalized machine learning data. A preprocessing method may be normalization (normalization), one-hot, or the like.

The classification model outputs a probability of each physical finger. For example, a probability of the left thumb (finger_id1) is 1%, a probability of the left index finger (finger_id2) is 90%, a probability of the left middle finger (finger_id3) is 3%, a probability of the left ring finger (finger_id4) is 0%, a probability of the left little finger (finger_id5) is 0%, a probability of the right thumb (finger_id6) is 1%, a probability of the right index finger (finger_id7) is 5%, a probability of the right middle finger (finger_id3) is 0%, a probability of the right ring finger (finger_id4) is 0%, and a probability of the right little finger (finger_id5) is 0%. An identifier of a finger corresponding to a maximum probability is obtained as a final output. That is, it is determined that the left index finger performs the touch operation.

Alternatively, the classification model may first output probabilities of the left hand and the right hand. For example, if the probability of the left hand is larger, it is determined that a finger on the left hand performs the touch operation. Then, a probability of each finger on the left hand is outputted. For example, a probability of the left thumb (finger_id1) is 2%, a probability of the left index finger (finger_id2) is 95%, a probability of the left middle finger (finger_id3) is 3%, a probability of the left ring finger (finger_id4) is 0, and a probability of the left little finger (finger_id5) is 0%. An identifier of a finger corresponding to a maximum probability is obtained as a final output. That is, it is determined that the left index finger performs the touch operation.

In addition, a specific quantity of samples may be used to train the classification model. For example, tap (tap) and scrolling (scroll) operations performed by several users on the screen in a landscape or portrait mode are collected, and an identifier is set to a finger that actually touches. The touch information is inputted to a to-be-trained classification model, and then an output result of the classification model is compared with the preset identifier, to correct the output result of the classification model.

After the touch information is obtained, the touch information and the motion sensing information of the operating terminal may further be inputted into the regression model, and the regression model outputs a pitch between the physical finger and the first screen.

S202: Obtain joint point information of the physical finger based on the touch information.

The physical finger touches the first screen, and there is a pitch between the physical finger and the first screen. The pitch is finally reflected in a form of the physical finger, that is, a state of each joint point of the physical finger. Therefore, the joint point information of the physical finger can be determined based on the identifier of the physical finger, the touch information of the physical finger on the first screen, and the motion sensing information of the operating terminal.

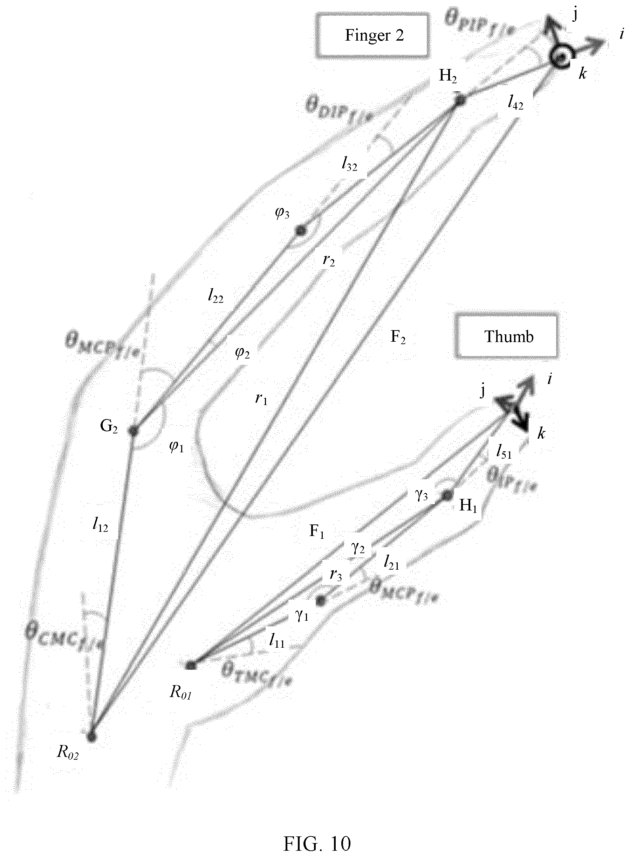

FIG. 10 is a schematic diagram of an example of joint point information of a left index finger and a left thumb. The thumb has two joint points, and the index finger has three joint points. Specifically, the joint point information may be a joint bending angle of the physical finger. The thumb shown in FIG. 10 is used as an example. Joint bending angles of the joints of the thumb are $\theta_{IP}$, $\theta_{MCP}$, $\theta_{TMC}$. Joint bending angles of the joints of the index finger are $\theta_{PIP}$, $\theta_{DIP}$, $\theta_{MCP}$, $\theta_{CMC}$. $\theta_{IP}$ is an angle between the fingertip of the thumb and the first joint point of the thumb, $\theta_{MCP}$ is an angle between the first joint point of the thumb and the second joint point of the thumb, and $\theta_{TMC}$ is an angle between the second joint point of the thumb and the root of the thumb. $\theta_{PIP}$ is an angle between the fingertip of the index finger and the first joint point of the index finger, $\theta_{DIP}$ is an angle between the first joint point of the index finger and the second joint point of the index finger, $\theta_{MCP}$ is an angle between the second joint point of the index finger and the third joint point of the index finger, and $\theta_{CMC}$ is the angle between the third joint point of the index finger and the root of the index finger.

During specific implementation, the identifier of the physical finger, the touch information of the physical finger on the first screen, and the motion sensing information of the operating terminal may be fused, and then the fused information is inputted into an inverse kinematics equation of the finger (formula 2 shown below) to reversely deduce the joint point information of the physical finger.

$$\theta = f(\text{Input}_{x,y,0,\text{yaw,pitch,id}})\ldots\ldots\text{Formula 2}$$

$\theta$ is the outputted joint angles of the index finger $\theta_{PIP}$, $\theta_{DIP}$, $\theta_{MCP}$, $\theta_{CMC}$ and the outputted joint angles of the thumb $\theta_{IP}$, $\theta_{MCP}$, $\theta_{TMC}$.
$f()$ is the inverse kinematics equation algorithm.
$\text{Input}_{x,y,0,\text{yaw,pitch,id}}$ is the fused information.

S203: Perform rendering based on the joint point information of the physical finger and a preset virtual finger model to obtain a form of a virtual finger corresponding to the touch operation.

After being obtained, the joint point information of the physical finger may be bound with the preset virtual finger model. The form of the virtual finger corresponding to the touch operation is obtained by rendering the virtual finger model.

Step S203 may specifically include the following steps B1 to B3 (not shown in the figure).

B1: Obtain the virtual finger model corresponding to the physical finger.

B2: Obtain the virtual finger based on the joint point information of the physical finger and the joint point data of the virtual finger model.

B3: Rotate and/or translate the virtual finger based on the touch information to obtain the form of the virtual finger corresponding to the touch operation.

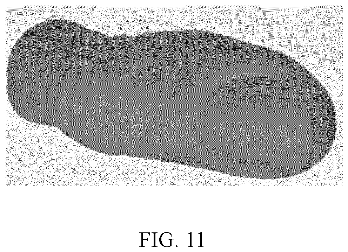

Different physical fingers have corresponding virtual finger models. The virtual finger model may be identified through an identifier. According to step B1, the virtual finger model corresponding to the identifier of the physical finger may be obtained from the operating terminal locally or from the server based on the identifier of the physical finger. FIG. 11 is a schematic diagram of a virtual finger model. The virtual finger model has a texture material corresponding to a 3D model. The 3D model of the virtual finger can be created through modeling software or the like. An object file (object, obj) of the 3D model includes vertex coordinates, vertex parameter space, a surface unit, and the like. A material library file (material library file, mtl) of the 3D model includes one or more materials. Each material has colors, textures, reflection maps, and the like.

After the virtual finger model corresponding to the physical finger is obtained, the virtual finger model also has a joint point shown in FIG. 10. However, a joint bending angle of the virtual finger model is in an initial state. Therefore, according to step B2, rendering software may be used to obtain the virtual finger based on the joint point information of the physical finger and the joint point data of the virtual finger model. The rendering software may be, for example, OpenGL. The foregoing 3D model for obtaining the virtual finger is inputted to a vertex buffer (vertex buffer) of the rendering software (which may be referred to as an "input vertex operation"). The joint point information of the physical finger is associated with the joint point data of the virtual finger model, that is, each joint point information of the physical finger is associated with the joint point data of the corresponding virtual finger, so that the bending angle of each joint of the virtual finger model is consistent with the bending angle of a corresponding joint of the physical finger, to obtain the virtual finger.

After the virtual finger is obtained, the form of the virtual finger corresponding to the touch operation needs to be obtained. The form needs to be consistent with a form of the operation performed by the physical finger on the first screen. Therefore, according to step B3, based on the touch information such as the touch point coordinates (x, y, 0) of the physical finger on the first screen, the information about the touch region centered around the touch point coordinates, a yaw of the physical finger relative to an orientation of the first screen, the pitch between the physical finger and the first screen, the virtual finger is rotated and/or translated to obtain the form of the virtual finger corresponding to the touch operation.

The foregoing B2 and B3 may be referred to as a vertex processing operation.

Further, a fragment processing operation may also be performed, that is, light intensity of a virtual finger rendering shader may be adjusted based on ambient light of a sensor of the control terminal.

S204: Display the form of the virtual finger on a second screen.

After the form of the virtual finger is obtained, a new layer may be created on a system layer to serve as a carrier of the virtual finger. The obtained form of the virtual finger is bound to the new layer, then the layer carrying the form of the virtual finger is inputted to a system synthesizer and is synthesized with a layer corresponding to another image on the second screen, and a synthesized image is finally displayed on the second screen, as shown in the right figure in FIG. 8.

The operating terminal displays the form of the virtual finger corresponding to the touch operation on the second screen, as shown in the right figure in FIG. 8. The form of the virtual finger is synthesized with the image on the second screen and realistically reproduces the touch operation performed by the user on the first screen.

According to a finger touch operation display method provided in this embodiment of this application, the touch information of the touch operation performed by the physical finger on the first screen of the control terminal is obtained, and the prestored virtual finger model and the rendering software are used, to obtain the form of the virtual finger corresponding to the touch operation. In addition, the form of the virtual finger is displayed on the second screen, so that visual feedback of a touch operation can be implemented at low costs and realistically.

Based on the same concept of the foregoing finger touch operation display method, a finger touch operation display apparatus is further provided. The apparatus may be the foregoing control terminal. The terminal has a screen on which a touch operation can be performed, and the terminal may further control a screen of another electronic device.

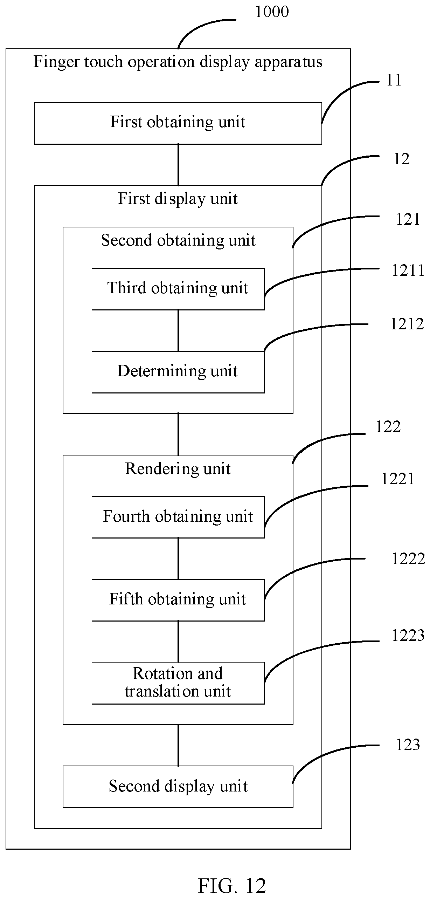

Some or all of the foregoing methods may be implemented through software or firmware. FIG. 12 is a schematic diagram of a structure of a finger touch operation display apparatus. The finger touch operation display apparatus is configured to perform the foregoing finger touch operation display method. Specifically, the apparatus 1000 includes:
a first obtaining unit 11, configured to obtain touch information of a touch operation in response to the touch operation performed by a physical finger on a first screen of a control terminal, where the touch information includes at least one piece of the following information: touch point coordinates of the physical finger on the first screen, information about a touch region centered around the touch point coordinates, a yaw of the physical finger relative to an orientation of the first screen, and a pitch between the physical finger and the first screen; and a first display unit 12, configured to display, based on the touch information, the touch operation in a form of a virtual finger on a second screen controlled by the control terminal.

In a possible implementation, the first display unit 12 includes: a second obtaining unit 121, configured to obtain joint point information of the physical finger based on the touch information; a rendering unit 122, configured to perform rendering based on the joint point information of the physical finger and a preset virtual finger model, to obtain a form of the virtual finger corresponding to the touch operation; and a second display unit 123, configured to display the form of the virtual finger on the second screen.

In another possible implementation, the second obtaining unit 121 includes: a third obtaining unit 1211, configured to obtain an identifier of the physical finger based on the touch information, where the identifier indicates which finger the physical finger is; and a determining unit 1212, configured to determine the joint point information of the physical finger based on the identifier of the physical finger, the touch information of the physical finger on the first screen, and motion sensing information of the operating terminal.

In still another possible implementation, the third obtaining unit 1211 is configured to determine the identifier of the physical finger based on the touch information through a classification model.

In still another possible implementation, the rendering unit 122 includes: a fourth obtaining unit 1221, configured to obtain a virtual finger model corresponding to the physical finger; a fifth obtaining unit 1222, configured to obtain the virtual finger based on the joint point information of the physical finger and joint point data of the virtual finger model; and a rotation and translation unit 1223, configured to rotate and/or translate, based on the touch information, the virtual finger to obtain the form of the virtual finger corresponding to the touch operation.

In still another possible implementation, the touch region is in a near elliptical shape, and the information about the touch region includes a touch area, a major axis, and a minor axis of the near elliptical shape.

In still another possible implementation, the joint point information of the physical finger is a joint bending angle of the physical finger.

According to the finger touch operation display apparatus provided in this embodiment of this application, the touch information of the touch operation performed by the physical finger on the first screen of the apparatus is obtained, and the touch operation is displayed in a form of the virtual finger on the second screen controlled by the apparatus based on the touch information, so that visual feedback of a touch operation can be implemented at low costs and realistically.

Optionally, during specific implementation, the finger touch operation display apparatus may be a chip or an integrated circuit.

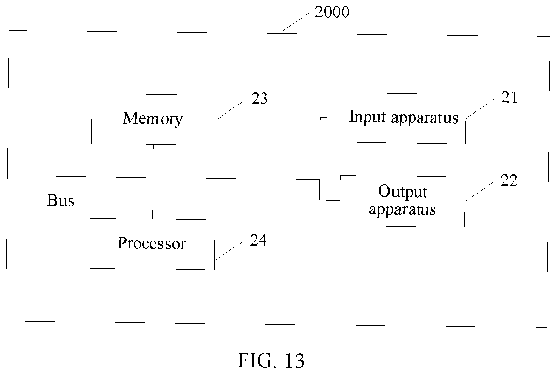

Optionally, when a part or all of the finger touch operation display method in the foregoing embodiments is implemented through software or firmware, a finger touch operation display apparatus 2000 provided in FIG. 13 may be used for implementation. As shown in FIG. 13, the finger touch operation display apparatus 2000 may include:
a memory 23 and a processor 24 (there may be one or more processors 24 in the apparatus, and one processor is used as an example in FIG. 13), and may further include an input apparatus 21 and an output apparatus 22. In this embodiment, the input apparatus 21, the output apparatus 22, the memory 23, and the processor 24 may be connected through a bus or in another manner, and for example, are connected through a bus in FIG. 13.

The processor 24 is configured to perform the method steps performed in FIG. 4 and FIG. 9.

Specifically, the processor 24 is configured to invoke program instructions to perform the following operations: obtaining touch information of a touch operation in response to the touch operation performed by a physical finger on a first screen of the control terminal, where the touch information includes at least one piece of the following information: touch point coordinates of the physical finger on the first screen, information about a touch region centered around the touch point coordinates, a yaw of the physical finger relative to an orientation of the first screen, and a pitch between the physical finger and the first screen; and displaying, based on the touch information, the touch operation in a form of a virtual finger on a second screen controlled by the control terminal.

In a possible implementation, that the processor 24 performs the operation of displaying, based on the touch information, the touch operation in a form of a virtual finger on a second screen controlled by the control terminal includes: obtaining joint point information of the physical finger based on the touch information; performing rendering based on the joint point information of the physical finger and a preset virtual finger model to obtain a form of the virtual finger corresponding to the touch operation; and displaying the form of the virtual finger on the second screen.

In another possible implementation, that the processor 24 performs the operation of obtaining the joint point information of the physical finger based on the touch information includes: obtaining an identifier of the physical finger based on the touch information, where the identifier indicates which finger the physical finger is; and determining the joint point information of the physical finger based on the identifier of the physical finger, the touch information of the physical finger on the first screen, and motion sensing information of the operating terminal.

In still another possible implementation, that the processor 24 performs the operation of obtaining an identifier of the physical finger based on the touch information includes: determining the identifier of the physical finger based on the touch information through a classification model.

In still another possible implementation, that the processor 24 performs the operation of performing rendering based on the joint point information of the physical finger and a preset virtual finger model to obtain a form of the virtual finger corresponding to the touch operation includes: obtaining the virtual finger model corresponding to the physical finger; obtaining the virtual finger based on the j oint point information of the physical finger and j oint point data of the virtual finger model; and rotating and/or translating, based on the touch information, the virtual finger to obtain the form of the virtual finger corresponding to the touch operation.

In still another possible implementation, the touch region is in a near elliptical shape, and the information about the touch region includes a touch area, a major axis, and a minor axis of the near elliptical shape.

In still another possible implementation, the joint point information of the physical finger is a joint bending angle of the physical finger.

Optionally, a program of the foregoing finger touch operation display method may be stored in the memory 23. The memory 23 may be a physically independent unit, or may be integrated with the processor 24. The memory 23 may also be configured to store data.

Optionally, when a part or all of the finger touch operation display method in the foregoing embodiments is implemented through software, the finger touch operation display apparatus may alternatively include only a processor. A memory configured to store the program is located outside the finger touch operation display apparatus. The processor is connected to the memory through a circuit or a wire, and is configured to read and execute the program stored in the memory.

The processor may be a central processing unit (central processing unit, CPU), a network processor (network processor, NP), or a WLAN device.

The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The memory may include a volatile memory (volatile memory), for example, a random access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

The input apparatus 21/output apparatus 22 may include a display (display) and a keyboard (keyboard), and optionally, may alternatively include a standard wired interface and a wireless interface.

It should be noted that the terms "system" and "network" in embodiments of the present invention may be used interchangeably. "A plurality of" means two or more. In view of this, "a plurality of" may also be understood as "at least two" in embodiments of the present invention. The term "and/or" is an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the unit division is merely logical function division, and may be other division during actual implementation. For example, a plurality of units or components may be combined or integrated into another system, or some features may be ignored or not performed. The displayed or discussed mutual couplings, or direct couplings, or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

All or a part of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted through the computer-readable storage medium. The computer instructions can be transmitted from a website, computer, server, or data center to another website, computer, server, or data center in a wired (for example, a coaxial cable, an optical fiber, a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), a magnetic medium, for example, a floppy disk, a hard disk, a magnetic tape, and a magnetic disk, an optical medium, for example, a digital versatile disc (digital versatile disc, DVD), a semiconductor medium, for example, a solid-state disk (solid state disk, SSD), or the like.

## Claims

1. A finger touch operation display method, wherein the method comprises:

   obtaining, by a control terminal, touch information of a touch operation in response to the touch operation performed by a physical finger on a first screen of the control terminal, wherein the touch information comprises at least one piece of the following information: touch point coordinates of the physical finger on the first screen, information about a touch region centered around the touch point coordinates, a yaw of the physical finger relative to the first screen, and a pitch between the physical finger and the first screen; and
   displaying, based on the touch information, the touch operation in a form of a virtual finger on a second screen controlled by the control terminal.

2. The method according to claim 1, wherein the displaying, based on the touch information, the touch operation in a form of a virtual finger on a second screen controlled by the control terminal comprises:

   obtaining joint point information of the physical finger based on the touch information;
   performing rendering based on the joint point information of the physical finger and a preset virtual finger model to obtain a form of the virtual finger corresponding to the touch operation; and
   displaying the form of the virtual finger on the second screen.

3. The method according to claim 2, wherein the obtaining joint point information of the physical finger based on the touch information comprises:

   obtaining an identifier of the physical finger based on the touch information, wherein the identifier indicates which finger the physical finger is; and

determining the joint point information of the physical finger based on the identifier of the physical finger, the touch information of the physical finger on the first screen, and motion sensing information of the operating terminal.

4. The method according to claim 3, wherein the obtaining an identifier of the physical finger based on the touch information comprises:
determining the identifier of the physical finger based on the touch information through a classification model.

5. The method according to any one of claims 2 to 4, wherein the performing rendering based on the joint point information of the physical finger and a preset virtual finger model to obtain a form of the virtual finger corresponding to the touch operation comprises:

   obtaining the virtual finger model corresponding to the physical finger;
   obtaining the virtual finger based on the joint point information of the physical finger and joint point data of the virtual finger model; and
   rotating and/or translating the virtual finger based on the touch information to obtain the form of the virtual finger corresponding to the touch operation.

6. The method according to any one of claims 1 to 5, wherein the touch region is in a near elliptical shape, and the information about the touch region comprises a touch area, a major axis, and a minor axis of the near elliptical shape.

7. The method according to any one of claims 2 to 6, wherein the joint point information of the physical finger is a joint bending angle of the physical finger.

8. A finger touch operation display apparatus, wherein the apparatus comprises:

   a first obtaining unit, configured to obtain touch information of a touch operation in response to the touch operation performed by a physical finger on a first screen of a control terminal, wherein the touch information comprises at least one piece of the following information: touch point coordinates of the physical finger on the first screen, information about a touch region centered around the touch point coordinates, a yaw of the physical finger relative to the first screen, and a pitch between the physical finger and the first screen; and
   a first display unit, configured to display, based on the touch information, the touch operation in a form of a virtual finger on a second screen controlled by the control terminal.

9. The apparatus according to claim 8, wherein the first display unit comprises:

   a second obtaining unit, configured to obtain joint point information of the physical finger based on the touch information;
   a rendering unit, configured to perform rendering based on the joint point information of the physical finger and a preset virtual finger model to obtain a form of the virtual finger corresponding to the touch operation; and
   a second display unit, configured to display the form of the virtual finger on the second screen.

10. The apparatus according to claim 9, wherein the second obtaining unit comprises:

    a third obtaining unit, configured to obtain an identifier of the physical finger based on the touch information, wherein the identifier indicates which finger the physical finger is; and
    a determining unit, configured to determine the joint point information of the physical finger based on the identifier of the physical finger, the touch information of the physical finger on the first screen, and motion sensing information of the operating terminal.

11. The apparatus according to claim 10, wherein the third obtaining unit is configured to determine the identifier of the physical finger based on the touch information through a classification model.

12. The apparatus according to any one of claims 9 to 11, wherein the rendering unit comprises:

    a fourth obtaining unit, configured to obtain the virtual finger model corresponding to the physical finger;
    a fifth obtaining unit, configured to obtain the virtual finger based on the joint point information of the physical finger and joint point data of the virtual finger model; and

a rotation and translation unit, configured to rotate and/or translate the virtual finger based on the touch information to obtain the form of the virtual finger corresponding to the touch operation.

13. The apparatus according to any one of claims 8 to 12, wherein the touch region is in a near elliptical shape, and the information about the touch region comprises a touch area, a major axis, and a minor axis of the near elliptical shape.

14. The apparatus according to any one of claims 9 to 13, wherein the joint point information of the physical finger is a joint bending angle of the physical finger.

15. A finger touch operation display apparatus, wherein the apparatus comprises: a processor, a memory, an input apparatus, and an output apparatus, wherein the memory stores instructions, and when the instructions are executed by the processor, the apparatus is enabled to perform the method according to any one of claims 1 to 7.

16. A computer program product, comprising instructions, wherein when the instructions are run on a computer, the method according to any one of claims 1 to 7 is performed.

17. A computer-readable storage medium storing a computer program, wherein when the program is executed by a processor, the method according to any one of claims 1 to 7 is implemented.

Screen touch
point
information
(x,y)

Screen touch
operation

Screen white
dot feedback

FIG. 1

FIG. 2

Proximity between a virtual hand
and a real hand

Pain degree between
different hands

▨ Realistic hand

▦ Toony (Toony)
hand

▩ Very Toony (Very
Toony) hand

▧ Zombie hand

▤ Robotic hand

▥ Wood block

FIG. 3

S101

A control terminal obtains touch information of a touch operation in response to the touch operation performed by a physical finger on a first screen of the control terminal

S102

Display, based on the touch information, the touch operation in a form of a virtual finger on a second screen controlled by the control terminal

FIG. 4

Touch region of a physical finger

Minor axis b

Yaw (yaw)

Touch point coordinates (x,y,0)

Area S

Major axis a

FIG. 5

Pitch pitch

Yaw yaw

FIG. 6

Pitch

90°    65°    45°    25°    15°

FIG. 7

First screen     Screen touch          Display the touch     Second screen
operation          operation in a form of
a virtual finger

FIG. 8

A control terminal obtains touch information of a touch operation in response to the touch operation performed by a physical finger on a first screen of the control terminal    S201

Obtain joint point information of the physical finger based on the touch information    S202

Performing rendering based on the joint point information of the physical finger and a preset virtual finger model to obtain a form of the virtual finger corresponding to the touch operation    S203

Display the form of the virtual finger on a second screen    S204

FIG. 9

FIG. 10

FIG. 11

1000

```
┌─────────────────────────────────────────────┐
│  Finger touch operation display apparatus    │
│                                              │── 11
│   ┌──────────────────────────────────┐       │
│   │       First obtaining unit        │       │
│   └──────────────────────────────────┘       │
│                   │                           │── 12
│   ┌──────────────────────────────────┐       │
│   │        First display unit         │       │── 121
│   │  ┌────────────────────────────┐   │       │
│   │  │     Second obtaining unit   │   │       │── 1211
│   │  │  ┌──────────────────────┐   │   │       │
│   │  │  │  Third obtaining unit  │   │   │       │
│   │  │  └──────────────────────┘   │   │       │── 1212
│   │  │           │                │   │       │
│   │  │  ┌──────────────────────┐   │   │       │
│   │  │  │   Determining unit     │   │   │       │
│   │  │  └──────────────────────┘   │   │       │
│   │  └────────────────────────────┘   │       │── 122
│   │             │                      │       │
│   │  ┌────────────────────────────┐   │       │── 1221
│   │  │        Rendering unit        │   │       │
│   │  │  ┌──────────────────────┐   │   │       │
│   │  │  │  Fourth obtaining unit │   │   │       │── 1222
│   │  │  └──────────────────────┘   │   │       │
│   │  │           │                │   │       │
│   │  │  ┌──────────────────────┐   │   │       │
│   │  │  │   Fifth obtaining unit │   │   │       │── 1223
│   │  │  └──────────────────────┘   │   │       │
│   │  │           │                │   │       │
│   │  │  ┌──────────────────────┐   │   │       │
│   │  │  │    Rotation and        │   │   │       │
│   │  │  │   translation unit     │   │   │       │── 123
│   │  │  └──────────────────────┘   │   │       │
│   │  └────────────────────────────┘   │       │
│   │             │                      │       │
│   │  ┌────────────────────────────┐   │       │
│   │  │     Second display unit      │   │       │
│   │  └────────────────────────────┘   │       │
│   └──────────────────────────────────┘       │
└─────────────────────────────────────────────┘
```

FIG. 12

FIG. 13

## INTERNATIONAL SEARCH REPORT

| International application No. |
|---|
| **PCT/CN2021/138732** |

**A. CLASSIFICATION OF SUBJECT MATTER**

G06F 3/0488(2022.01)i

According to International Patent Classification (IPC) or to both national classification and IPC

**B. FIELDS SEARCHED**

Minimum documentation searched (classification system followed by classification symbols)

G06F3/-

Documentation searched other than minimum documentation to the extent that such documents are included in the fields searched

Electronic data base consulted during the international search (name of data base and, where practicable, search terms used)

CNABS; CNTXT; TWABS; TWTXT; WPABSC; ENTXTC; VEN; USTXT; EPTXT; WOTXT; DWPI; CNKI; 百度: 手, 手指, 虚拟, 触摸, 光标, 坐标, 位置, hand, finger, virtual, touch, cursor, coordinate, position

**C. DOCUMENTS CONSIDERED TO BE RELEVANT**

| Category* | Citation of document, with indication, where appropriate, of the relevant passages | Relevant to claim No. |
|---|---|---|
| X | US 2015355715 A1 (ADOBE SYSTEMS INCORPORATED) 10 December 2015 (2015-12-10) description, paragraphs 29-134 and figures 1-10 | 1-17 |
| X | CN 104272218 A (HEWLETT-PACKARD DEVELOPMENT COMPANY, L.P.) 07 January 2015 (2015-01-07) description, paragraphs 9-56 and figures 1-6 | 1-17 |
| X | CN 101010661 A (MATSUSHITA ELECTRIC INDUSTRY CO., LTD.) 01 August 2007 (2007-08-01) description, paragraphs 59-111 and figures 1-18 | 1-17 |
| X | WO 2015093005 A1 (PANASONIC INTELLECTUAL PROPERTY MANAGEMENT CO., LTD.) 25 June 2015 (2015-06-25) description, paragraphs 7-36 and figures 1-11 | 1-17 |
| A | CN 108958471 A (SCIENTIFIC RESEARCH TRAINING CENTER FOR CHINESE ASTRONAUTS) 07 December 2018 (2018-12-07) entire document | 1-17 |
| A | WO 2010084498 A1 (ZRRO TECHNOLOGIES 2009 LTD) 29 July 2010 (2010-07-29) entire document | 1-17 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 February 2022** | **11 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/138732**

**C.    DOCUMENTS CONSIDERED TO BE RELEVANT**

| Category* | Citation of document, with indication, where appropriate, of the relevant passages | Relevant to claim No. |
|---|---|---|
| A | US 2008048997 A1 (SYNAPTICS INCORPORATED) 28 February 2008 (2008-02-28)<br>entire document | 1-17 |

Form PCT/ISA/210 (second sheet) (January 2015)

**INTERNATIONAL SEARCH REPORT**
Information on patent family members

International application No.

**PCT/CN2021/138732**

| Patent document cited in search report | | | Publication date (day/month/year) | Patent family member(s) | | | Publication date (day/month/year) |
|---|---|---|---|---|---|---|---|
| US | 2015355715 | A1 | 10 December 2015 | US | 10782787 | B2 | 22 September 2020 |
| CN | 104272218 | A | 07 January 2015 | TW | 201405414 | A | 01 February 2014 |
| | | | | TW | I492146 | B | 11 July 2015 |
| | | | | US | 2015084866 | A1 | 26 March 2015 |
| | | | | US | 10048779 | B2 | 14 August 2018 |
| | | | | GB | 201418417 | D0 | 03 December 2014 |
| | | | | GB | 2515436 | A | 24 December 2014 |
| | | | | GB | 2515436 | B | 02 September 2020 |
| | | | | WO | 2014003796 | A1 | 03 January 2014 |
| | | | | DE | 112012006199 | T5 | 24 December 2014 |
| | | | | CN | 104272218 | B | 08 March 2017 |
| CN | 101010661 | A | 01 August 2007 | JP | 2006072854 | A | 16 March 2006 |
| | | | | JP | 4351599 | B2 | 28 October 2009 |
| | | | | EP | 1811360 | A1 | 25 July 2007 |
| | | | | US | 2007262965 | A1 | 15 November 2007 |
| | | | | WO | 2006027924 | A1 | 16 March 2006 |
| | | | | CN | 102411438 | A | 11 April 2012 |
| WO | 2015093005 | A1 | 25 June 2015 | None | | | |
| CN | 108958471 | A | 07 December 2018 | CN | 108958471 | B | 04 June 2021 |
| WO | 2010084498 | A1 | 29 July 2010 | KR | 20110132349 | A | 07 December 2011 |
| | | | | US | 2011279397 | A1 | 17 November 2011 |
| | | | | US | 8830189 | B2 | 09 September 2014 |
| | | | | WO | 2010084498 | A4 | 16 September 2010 |
| | | | | EP | 2389622 | A1 | 30 November 2011 |
| | | | | CN | 102334086 | A | 25 January 2012 |
| | | | | JP | 2012515966 | A | 12 July 2012 |
| | | | | IN | 201105599 | P4 | 09 November 2012 |
| | | | | IL | 214225 | A | 03 February 2013 |
| US | 2008048997 | A1 | 28 February 2008 | US | 7911456 | B2 | 22 March 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011511097